Europäisches Patentamt

(19) European Patent Office

Office européen des brevets

(11) Publication number: **0 245 583**
**B1**

(12) **EUROPEAN PATENT SPECIFICATION**

(45) Date of publication of patent specification: **25.07.90**

(51) Int. Cl.⁵: **F 16 F 15/26**

(21) Application number: **87101227.4**

(22) Date of filing: **29.01.87**

(54) Inline counterbalance weight system for a single cylinder engine.

(30) Priority: **12.05.86 US 862312**

(43) Date of publication of application:
**19.11.87 Bulletin 87/47**

(45) Publication of the grant of the patent:
**25.07.90 Bulletin 90/30**

(84) Designated Contracting States:
**DE FR GB IT**

(56) References cited:
**EP-A-0 126 661**
**US-A-2 407 102**
**US-E- 28 512**

(73) Proprietor: **TECUMSEH PRODUCTS COMPANY**
**100 East Patterson Street**
**Tecumseh Michigan 49286 (US)**

(72) Inventor: **Kandler, William C.**
**1709 McKinley Street**
**New Holstein Wisconsin 53061 (US)**

(74) Representative: **Weitzel, Wolfgang, Dr.-Ing.**
**St. Pöltener Strasse 43**
**D-7920 Heidenheim (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a combustion engine as per the preamble of claim 1. An engine of this type is described in EP—A—0 126 661.

As a result of the symmetrical arrangement of the weights of the crankshaft and of the counter-balance system, vibration imbalance in the engine in the direction of the rectilinear path of the piston is substantially eliminated.

However, further elimination is still desired, because in general, a limiting characteristic of a small single cyclinder internal combustion engine is the high vibration level created by the engine. Vibrations are inherently generated in such engine, originating from the centerline of its rotating crankshaft and oriented along the line of reciprocating movement of its piston passing through the crankshaft centerline. The vibratory force generated by the engine and transmitted to the operating machine to which the engine is attached and to which it supplies rotary driving power is annoying to the user and can be harmful to the reiliability of the machine and shorten its operating life.

Different balancing arrangements are known in the prior art for mounting on a single cylinder engine to provide a balancing force to oppose the vibratory force and thereby substantially reduce or eliminate vibrations incident to the reciprocation of the piston and motion of the crankshaft and other connecting parts of the engine. The approach of one balancing arrangement for a single cylinder engine, such as disclosed in U.S. Patent 2,407,102 to Ryder, is to eccentrically mount a balancing weight on an auxiliary shaft disposed on the engine parallel to its crankshaft and driven from the crankshaft to rotate in an opposite direction. The balancing weight is located intermediate a pair of weights eccentrically mounted on the crankshaft and the auxiliary shaft is displaced laterally from the line of reciprocation of the piston.

In another balancing arrangement for a single cylinder engine, a pair of balancing weights are offset in the same direction from the line of reciprocation of the piston and in opposite directions from the crankshaft. The balancing weights are eccentrically mounted on the engine for rotation about axes which extend generally parallel to the crankshaft. Their direction of rotation is opposite to that of a pair of eccentric weights mounted on the crankshaft. While these balancing arrangements substantially counterbalance and eliminate the vibratory force emanating from the centerline of the crankshaft along the line of reciprocation of the piston, they introduce an undesirable rocking couple about the mounting base of the engine.

US—RE—28 512 comprises amongst other items a rotating balance weight 13. However, this engine with regard to some components is different from the engine as described in the preamble of claim 1. In addition, it does not meet the desired standards of vibration reduction.

Consequently, a need still exists for a balancing arrangement for a single cylinder engine which will eliminate vibratory imbalance due to piston reciprocation and crankshaft and connecting rod rotational motion without substituting other imbalance forces in its place.

It is the purpose of the invention to provide an engine as per the preamble of claim 1, which will eliminate vibratory imbalance due to piston reciprocation and crankshaft and connecting rod rotational motion without substituting other imbalance forces in its place.

This purpose is met by the characterizing features of claim 1.

In the course of the following detailed description, reference will be made to the attached drawings in which:

Fig. 1 is a bottom view of a single cylinder internal combustion engine, with a side plate removed, to expose an inline counterbalance system constructed in accordance with the present invention which is incorporated by the engine.

Figs. 2a to 2d are top views, from the opposite side of the engine in Fig. 1, of the reciprocating and rotating components of the engine and the counter-balance system at successive positions in one cycle of the engine wherein the piston is halfway along its stroke advancing toward the outer end thereof in Fig. 2a, is at the outer end of its stroke in Fig. 2b, is halfway along its stroke advancing toward the inner end thereof in Fig. 2c, and is at the inner end of its stroke in Fig. 2d.

Figs. 3a to 3d are fragmentary end elevational views of the reciprocating and rotating components of the engine and the counterbalance system at successive positions in one cycle of the engine corresponding to the positions of Figs. 2a to 2d.

Fig. 4 is an end elevational view of the engine of Fig. 1, on a somewhat smaller scale.

Figs. 5a to 5c are schematical representations of the reciprocating piston, the rotating crankshaft with eccentric weights attached thereon and the eccentric weights of the counterbalance system, showing the directions of the force vectors associated with each at the outer end position of the piston in Figs. 5a and 5b which correspond to Figs. 2b and 3b and at the position of the piston halfway along its stroke advancing toward the inner end thereof in Fig. 5c which correspond to Figs. 2c and 3c.

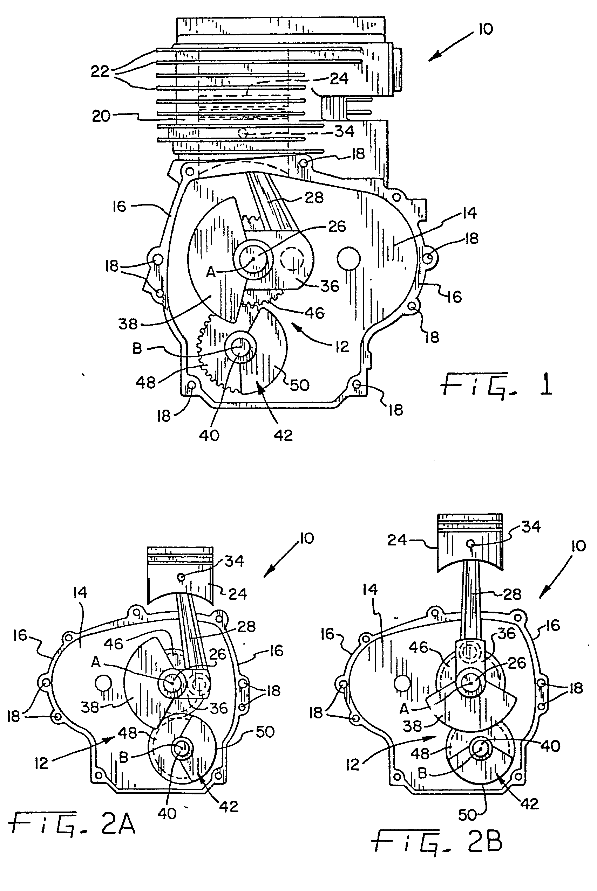

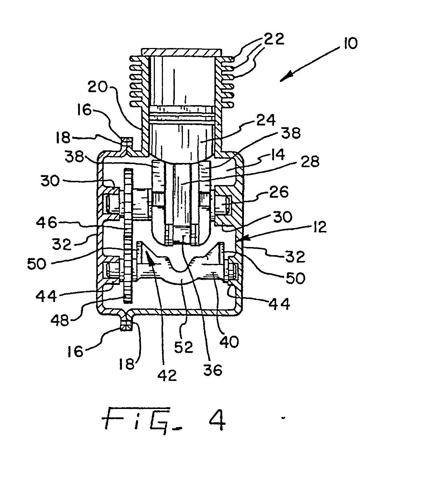

Referring now to the drawings, and particularly to Figs. 1 and 4, there is shown a single cylinder, reciprocating piston, internal combustion engine, generally designated 10, in which is incorporated the inline counterbalance weight system of the present invention, being indicated by the numeral 12. The engine 10 includes a crankcase 14 having a peripheral flange 16 with holes 18 formed therein. The engine is adapted to be mounted to a machine (not shown), for example the deck of a lawn mower, which will be driven by the rotary power of the engine. The single cylinder 20 of the engine 10 is integral with crankcase 14 and is provided with cooling fins 22.

The engine 10 also includes a cylindrical piston 24, a crankshaft 26 and a connecting rod 28 pivotally interconnecting the piston and crankshaft. The piston 24 is adapted to reciprocate within cylinder 20 along a generally rectilinear path extending horizontally and generally parallel to the flange. The crankshaft 26 is rotatably mounted at its opposite ends by bearings 30 to the opposite sides 32 of the crankcase 14. The connecting rod 28 extends between and pivotally connects a wrist pin 34 in the piston 24 to an eccentric or offset U-shaped arm or throw 36 attached to and extending radially from the crankshaft 26. As piston 24 reciprocates in cylinder 20, it rotatably drives offset throw 36 and the crankshaft 26, for instance in a clockwise direction as viewed in Figs. 2a to 2d, about an axis A extending generally transverse to and in alignment with the rectilinear path of reciprocation of piston 24. A pair of spaced weights 38 are eccentrically attached to crankshaft 26 and extend radially therefrom opposite to the offset arm 36 for counterbalancing the eccentrically located mass of the arm 36 and part of the reciprocating masses during rotation of the crankshaft 26. Without the provision of some counterbalancing mechanism, the single cylinder engine 10 with the construction as described will vibrate along the path of reciprocation of piston 24 and in a lateral direction.

The inline counterbalance weight system 12 of the present invention will effectively eliminate generation of such vibration in the engine 10 and will do so without introducing other equally undesirable imbalance forces. The counterbalance weight system 12 includes a counterbalance shaft 40 and a counterbalance weight 42 eccentrically attached on the shaft. The counterbalance shaft 40 is rotatably mounted by bearings 44 to the opposite sides 32 of the crankcase 14 so as to extend generally parallel to crankshaft 26 and, along with crankshaft 26, transverse to and in alignment with the rectilinear path of reciprocation of piston 24, the characterization of the system 12 as "inline" derives from the approximately aligned relationship of the counterbalance shaft 40 to crankshaft 26 and the rectilinear path of reciprocation of piston 24, as well as the approximately aligned and symmetrical relationship of the crankshaft offset arm 36 and eccentric weights 38 and the counterbalance weight 42 to the rectilinear path of the piston 24.

The counterbalance shaft 40 is driven off crankshaft 26 by means in the form of intermeshing gears 46, 48 respectively keyed to the crankshaft 26 and counterbalance shaft 40. By the drive connection provided by gears 46, 48, counterbalance shaft 40 and weight 42 are rotated about an axis B in a direction counter or opposite, such as counterclockwise in Figs. 2a to 2d, to that of the crankshaft 26 and its offset arm 36 and weights 38. The gears 46, 48 are equal in diameter so as to define the timed relationship between respective rotational cycles of the crankshaft 26 and the counterbalance shaft 40 as unity or in a one-to-one ratio.

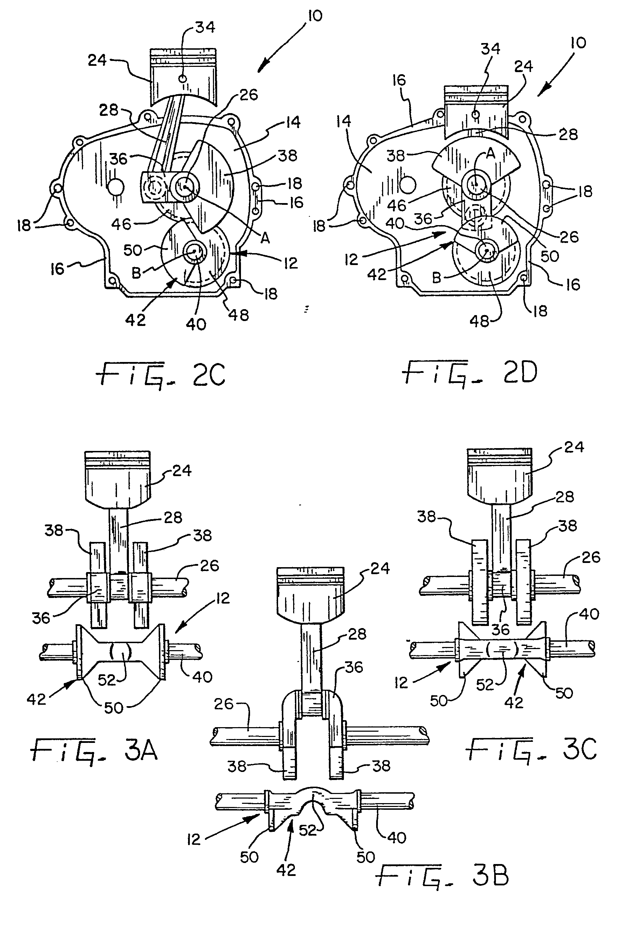

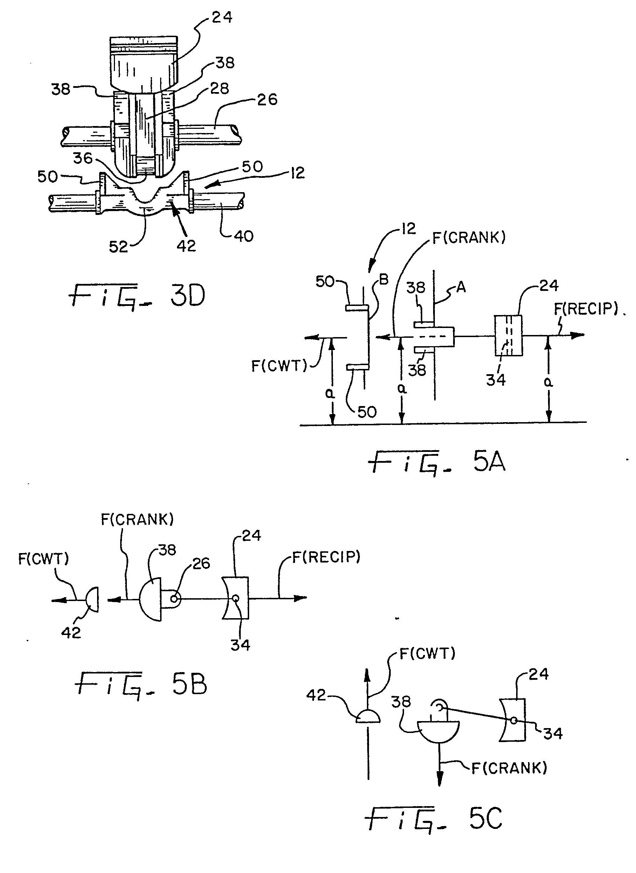

Figs. 2a to 2d illustrate the respective successive positions of the piston 24, connecting rod 28, crankshaft offset arm 36 and eccentric weights 38, and counterbalance weight 42 at successive quarter-turns of the crankshaft 26 and counterbalance shaft 40 in one cycle of the engine 10. The successive positions of these same components are shown in Figs. 3a to 3d which correspond respectively to those positions shown in Figs. 2a to 2d.

In Figs. 2a and 3a, the piston 24 is approximately halfway along its rectilinear reciprocatory stroke, advancing toward the top dead center (TDC) position thereof. Crankshaft weights 38 and counterbalance weight 42 are disposed on opposite sides of their respective rotational axes A, B in opposing relationship such that their force vectors $F_{crank}$ and $F_{cwt}$, as illustrated in Fig. 5c, are balanced with respect to one another. In Fig. 2c and 3c, the piston 24 is at the same position as in Figs. 2a and 3a, but is now advancing toward the bottom dead center (BDC) of its stroke. The rotating crankshaft weights 38 and counterbalance weight 42 are again disposed in opposing relationship such that their force vectors are balanced with respect to one another, but the positions of the respective weights have been interchanged.

In Figs. 2b and 3b, the piston 24 is at TDC, whereas in Figs. 2d and 3d, it is at BDC. In both instances, the rotating crankshaft weights 38 and the counterbalance weight 42 are disposed on the same sides of their respective rotational axes A, B such that their force vectors are additive with respect to one another and balanced with respect to the force vector of the piston. For example in Figs. 5a and 5b, the force vectors of the crankshaft weights 38 $F_{crank}$ and counterbalance weight 42 $F_{cwt}$ together balance the force vector $F_{recip}$ of the piston.

In view of the above-described relationships, vibration imbalance in the engine 10 in the direction of the rectilinear path of reciprocation of the piston 24 is substantially eliminated. This is due to the force vector $F_{recip}$ of the reciprocating piston 24 being generally balanced by the force vectors $F_{crank}$ and $F_{cwt}$ of the rotating counterbalance weight 42 and the crankshaft 26 and weights 38 thereon when the piston 24 is at opposite end positions of its stroke. Likewise, rocking imbalance in the engine 10 is substantially eliminated by the counterbalance system 12. This is due to the generally equal displacement of the force vectors $F_{recip}$, $F_{cwt}$, $F_{crank}$ of the reciprocating piston 24, the counterbalance weight 42 and the crankshaft 26 and weights 38 thereon, as represented in Fig. 5a by distance "a", and also due to the generally balanced relationship of the force vector of the rotating crankshaft 26 and weights 38 thereon with the force vector of the rotating counterbalance weight 42 when the piston 24 is at an intermediate position between opposite end positions of its stroke.

As seen in Figs. 3a to 3d, the counterbalance weight 42 has a peripheral configuration which allows it to rotate in a nesting relationship with the offset arm 36 of the rotating crankshaft 26. More specifically, the counterbalance weight 42 has a pair of laterally spaced apart lobes 50 which project toward the rotating crankshaft 26 during certain portions of the rotation cycle of the counterbalance shaft 40 and overlap with portions of the rotating offset arm 36. The lobes 50 and the section 52 of the shaft 40 extending therebetween define the peripheral configuration adapted to receive portions of the crankshaft 26 in the wraparound or nesting relationship which minimizes the amount of space required to accommodate the counterbalance system 12 in the engine 10 and brings counterbalance weight 42 more inline with crankshaft weight 38.

## Claims

1. A single cylinder internal combustion engine, having a piston (24) reciprocable in said cylinder along a generally rectilinear path; a main, rotatably mounted crankshaft (26) connected to said piston and rotatably driven in a first rotational direction by said piston about an axis extending generally transverse to and in alignment with said rectilinear path of reciprocation of said piston; weight means (38) eccentrically mounted on said crankshaft (26); a rotatably mounted counterbalance system (12) extending generally parallel to said crankshaft (26) at a side thereof opposite from said piston (24) and also generally transverse to and in alignment with said rectilinear path of reciprocation of said piston (24); means (46, 48) driving said counterbalance system (12) in a second rotational direction opposite to said first rotational direction of said crankshaft (26) and in a predetermined timed relationship thereto, for causing vibration imbalance in said engine in the direction of said rectilinear path of reciprocation of said piston (24) to be substantially eliminated due to the force vector of said reciprocating piston (24) being generally aligned with and balanced by the force vectors of said rotating counterbalance system (12) and said crankshaft and weight means thereon when said piston (24) is at opposite end positions of its stroke and causing rocking imbalance in said engine to be substantially eliminated due to the force vector of said rotating crankshaft (26) and weight means thereon being generally balanced by the force vector of said rotating counterbalance system when said piston is at an intermediate position between the opposite ends of its stroke, whereby the said counterbalance system (12) includes a rotatably mounted counterbalance shaft (40) extending generally parallel to said crankshaft and transverse to and in alignment with said rectilinear path of reciprocation of said piston (24), whereby the

said main crankshaft (26) and said counterbalance shaft (40) are rotatable in a one-to-one ratio in said predetermined timed relationship, and said counterbalance system includes a counterbalance weight (42) eccentrically mounted on said counterbalance shaft and disposed in symmetrical relationship thereon relative to said rectilinear path of reciprocation of said piston (24), and said weight means on said crankshaft (26) includes a pair of spaced weights (38) eccentrically mounted on said crankshaft and disposed in symmetrical relationship thereon relative to said rectilinear path of reciprocation of said piston (24), whereby the said counterbalance system (12) further includes: a rotatably mounted counterbalance shaft (40) extending generally parallel to said crankshaft (26) and transverse to and in alignment with said rectilinear path of reciprocation of said piston (24); and a counterbalance weight (42) eccentrically mounted on said counterbalance shaft and disposed in symmetrical relationship thereon relative to said rectilinar path of reciprocation of said piston, characterized in that said counterbalance weight has a peripheral configuration which allows it to rotate in a nesting relationship with portions of said rotating crankshaft, and in that said counterbalance weight has a pair of laterally spaced apart lobes (50) which project toward said crankshaft (26) and overlap with portions (38) thereof during counter-rotation of said crankshaft and said counterweight shaft relative to one another, said lobes defining a peripheral configuration adapted to receive said portions of said crankshaft in a nesting relationship.

2. The engine as recited in claim 1, characterized in that said counterbalance system (12) driving means includes intermeshing gears (46, 48) interconnecting said main and counterbalance shafts (26, 40) and driving said counterbalance shaft in said second rotational direction opposite to said first rotational direction of said crankshaft and in said predetermined timed relationship thereto.

## Patentansprüche

1. Einzylindermotor mit einem Kolben (24), der im Zylinder entlang einer im wesentlichen geradlinigen Bahn hin und her geht, mit einer drehbar gelagerten Hauptkurbelwelle (26), die am Kolben angreift und in einer ersten Drehrichtung vom Kolben um eine Achse angetrieben ist, die im wesentlichen quer zur geradlinigen Bahn des Kolbens sowie in Ausrichtung mit dieser verläuft, mit einem Gewicht (38), das auf der Kurbelwelle (26) exzentrisch gelagert ist, mit einem drehbar gelagerten Ausgleichsgewichts-System (12), das sich im wesentlichen parallel zur Kurbelwelle (26) auf der dem Kolben (24) abgewandten Seite erstreckt und ebenfalls im wesentlichen quer zur gradlinigen Bahn des Kolbens (24) und in Ausrichtung hierzu verläuft, mit Mitteln (46, 48), die das Ausgleichsgewichts-System in einer zweiten Drehrichtung entgegen der ersten Drehrichtung der Kurbelwelle und in einem vorgegebenen zeitlichen Verhältnis hierzu antreibt, damit eine Schwingungsunwucht im Motor in Richtung der geradlinigen Bahn des Kolbens (24) im wesentlichen zu beseitigen, und zwar deshalb, weil der Kraftvektor des Kolbens (24) im wesentlichen fluchtet mit und aufgehoben wird durch die Kraftvektoren des umlaufenden Ausgleichsgewichts-Systemes (12) sowie der Kurbelwelle und des hierauf befindlichen Gewichtes, wenn sich der Kolben (24) an einander gegenüberliegenden Endpositionen seines Hubes befindet, ferner um hin und her gehende Unwuchten im Motor im wesentlichen zu beseitigen aufgrund der Tatsache, daß der Kraftvektor in der umlaufenden Kurbelwelle (26) und dem hierauf befindlichen Gewicht im wesentlichen durch den Kraftvektor des umlaufenden Ausgleichsgewichts-Systemes (12) dann ausgeglichen ist, wenn sich der Kolben in einer Zwischenposition zwischen den einander gegenüberliegenden Enden seines Hubes befindet, wobei das Ausgleichgewichts-System (12) eine drehbar gelagerte Ausgleichsgewichtswelle (40) aufweist, die sich im wesentlichen parallel zur Kurbelwelle und quer zur Bahn des Kolbens (24) sowie fluchtend hierzu erstreckt, wobei die Hauptkurbelwelle (26) und die Gegengewichtswelle (40) im genannten vorgegebenen zwitlichen Verhältnis in einem eins-zu-eins-Verhältnis drehbar sind, wobei das Ausgleichsgewichts-System (12) ein Ausgliechsgewicht (42) aufweist, das auf der Ausgleichsgewichtswelle (40) exzentrisch gelagert und hierauf symmetrisch angeordnet ist in Bezug auf die Bahn des Kolbens (24), wobei das Gewicht auf der Kurbelwelle (26) ein Paar von einen gegenseitigen Abstand aufweisenden Gewichten (38) umfaßt, die auf der Kurbelwelle exzentrisch gelagert und hierauf in Bezug auf die Bahn des Kolbens (24) symmetrisch angeordnet sind, wobei das Ausgleichsgewichts-System (12) weiterhin umfaßt: eine drehbar gelagerte Ausgleichsgewichtswelle (40), die sich im wesentlichen parallel zur Kurbelwelle (26) und quer zur Bahn des Kolbens (24) sowie hiermit fluchten erstreckt; ein Ausgleichsgewicht (42), das auf der Ausgleichsgewichts-Welle exzentrisch gelagert und hierauf in Bezug auf die Bahn des Kolbens (24) symmetrisch angeordet ist, dadurch gekennzeichnet, daß das Ausgleichsgewicht eine Umfangsgestaltung aufweist, die es ihm erlaubt, mit Teilen der umlaufenden Kurbelwelle in gegenseitigem Eingriff umzulaufen, und daß das Ausgleichsgewicht ein Paar einen gegenseitigen seitlichen Abstand aufweisender Nocken (50) umfaßt, die gegen die Kurbelwelle (26) hin vorragen und die sich gegenseitig mit Teilen (38) während des Gegenlaufes der Kurbelwelle und der Ausgleichsgewichtswelle überlappen, wobei die Nocken eine solche Umfangsgestaltung haben, daß sie entsprechende Teile der Kurbelwelle in einem ineinandergreifenden Verhältnis aufnehmen.

2. Motor nach Anspruch 1, dadurch gekennzeichnet, daß der Antrieb des Ausgleichsgewichts-Systemes (12) miteinander kämmende Zahnräder (46, 48) aufweist, die die Haupt-Kurbelwelle (26) und die Gegengewichtswelle (40) miteinander verbinden und die die Gegengewichtswelle (40) in der genannten zweiten Drehrichtung entgegen der genannten ersten Drehrichtung der Kurbelwelle sowie in einem vorgegebenen seitlichen Verhältnis hierzu antreiben.

**Revendications**

1. Moteur à combustion interne à cylindre unique comportant: un piston (24) pouvant aller et venir dans ce cylindre suivant une course généralement rectiligne; un vilebrequin principal monté en rotation (26) relié au piston et entraîné en rotation par ce piston dans un premier sens de rotation autour d'un axe disposé généralement transversalement par rapport à la course de va-et-vient rectiligne du piston et en alignement avec celle-ci; des moyens de poids (38) montés excentriquement sur le vilebrequin (26); un système de compensation du balourd monté en rotation (12) disposé généralement parallèlement au vilebrequin (26) d'un côté de celui-ci opposé au piston (24) et également généralement transversalement par rapport à la course de va-et-vent rectiligne de piston (24) et en alignement avec celle-ci; des moyens (46, 48) entraînant le système de compensation du balourd (12) dans un second sens de rotation opposé au premier sens de rotation du vilebrequin (26) et dans une relation de synchronisation prédéterminée par rapport à celui-ci, de manière à produire une suppression pratiquement complète du déséquilibrage de vibration du moteur dans la direction de la course de va-et-vient rectiligne du piston (24) grâce au fait que le vecteur de force du piston de va-et-vient (24) est généralement aligné avec les vecteurs et équilibré par les vecteurs de force du système de compensation du balourd (12) et du vilebrequin portant les moyens de poids sur celui-ci, lorsque le piston (24) se trouve aux extrémités opposées de sa course, et de manière à produire une suppression pratiquement complète du déséquilibrage de balancement du moteur grâce au fait que le vecteur de force du vilebrequin tournant (26) portant les moyens de poids sur celui-ci, est généralement équilibré par le vecteur de force du système de compensation de balourd tournant lorsque le piston se trouve dans une position intermédiaire entre les extrémités opposées de sa course; grâce à quoi le système de compensation du balourd (12) comprend un arbre de compensation de balourd monté en rotation (40) disposé généralement parallèlement au vilebrequin et transversalement par rapport à celui-ci, en alignement avec la course de va-et-vient rectiligne du piston (24); grâce à quoi le vilebrequin principal (26) et l'arbre de compensation de balourd (40) peuvent tourner dans une relation de synchronisation prédéterminée de rapport un à un; grâce à quoi le système de compensation du balourd comprend un contrepoids (42) monté excentriquement sur l'arbre de compensation du balourd et placé sur celui-ci dans une disposition symétrique par rapport à la course de va-et-vient rectiligne du piston (24); grâce à quoi les moyens de poids montés sur le vilebrequin (26) comprennent une paire de poids espacés (38) montés excentriquement sur le vilebrequin et placés sur celui-ci dans une disposition symétrique par rapport à la course de va-et-vient rectiligne du piston (24); et grâce à quoi le système de compensation du balourd (12) comprend, en outre: un arbre de compensation de balourd monté en rotation (40) disposé généralement parallèlement au vilebrequin (26) et transversalement par rapport à celui-ci, en alignement avec la course de va-et-vient rectiligne du piston (24); et un contrepoids (42) monté excentriquement sur l'arbre de compensation du balourd et placé sur celui-ci dans une dispostion symétrique par rapport à la course de va-et-vient rectiligne du piston; système caractérisé en ce que le contrepoids de compensation du balourd présente une configuration périphérique lui permettant de tourner dans une relation d'emboîtement avec les parties correspondantes du vilebrequin tournant, et en ce que le contrepoids de compensation du balourd présente une paire de lobes espacés latéralement (50) qui font saillie vers le vilebrequin (26) et se recouvrent avec les parties (38) de celui-ci pendant la rotation du vilebrequin et de l'arbre de compensation du balourd tournant en sens inverses l'un de l'autre, ces lobes définissant une configuration périphérique destinée à recevoir les parties du vilebrequin dans une relation d'emboîtement.

2. Moteur selon la revendication 1, caractérisé en ce que les moyens d'entraînement du système de compensation du balourd (12) comprennent des engrenages en prise (46, 48) reliant ensemble le vilebrequin principal et l'arbre de compensation du balourd (26, 40), et entraînant l'arbre de compensation du balourd dans le second sens de rotation opposé au premier sens de rotation du vilebrequin, dans la relation de synchronisation prédéterminée par rapport à celui-ci.

FIG. 1

FIG. 2A

FIG. 2B

FIG. 2C

FIG. 2D

FIG. 3A

FIG. 3B

FIG. 3C

2

FiG. 3D

FiG. 5A

FiG. 5B

FiG. 5C

FiG. 4